# EUROPÄISCHE PATENTSCHRIFT

(11) **EP 1 581 426 B1**
(45) Veröffentlichungstag und Bekanntmachung des Hinweises auf die Patenterteilung: **15.11.2006**
(21) Anmeldenummer: 03785942.8
(22) Anmeldetag: 24.12.2003
(51) Int. Cl.: B65B 1/00

(54) **FÜLLMASCHINE UND VERFAHREN ZUM ABFÜLLEN VON LEBENSMITTELN**
FILLING MACHINE AND METHOD FOR PACKING COMESTIBLES
MACHINE DE REMPLISSAGE ET PROCEDE POUR EMBALLER DES DENREES ALIMENTAIRES

(30) Priorität: 30.12.2002 DE 10261706
(43) Veröffentlichungstag der Anmeldung: 05.10.2005
(73) Patentinhaber: SIG Technology Ltd., 8212 Neuhausen am Rheinfall (CH)
(72) Erfinder: BALTES, Klaus, 50127 Bergheim (DE); BERGER, Jörg, 52428 Jülich (DE)
(74) Vertreter: Cohausz & Florack
(86) Internationale Anmeldenummer: PCT/EP2003/014903
(87) Internationale Veröffentlichungsnummer: WO 2004/058567

(56) Entgegenhaltungen:
- EP-A- 0 479 010
- DE-A- 3 422 641
- DE-A- 4 224 003
- US-A- 4 168 599
- US-A- 6 101 786

## Beschreibung

Die Erfindung betrifft eine Füllmaschine und ein Verfahren zum Abfüllen von Lebensmitteln, insbesondere Getränken, in oben offene Verbundpackungen und zum Verschließen derselben, mit einer Packungstransporteinrichtung, einer Sterilisiereinheit, einer Trocknungseinheit, einer Fülleinheit und einer Verschließeinheit.

Solche Füllmaschinen sind in verschiedener Ausführung aus der Praxis bekannt. In der Regel sind dabei die einzelnen hintereinander geschalteten Einheiten oberhalb der Verbundpackungen in einer Linie angeordnet, wobei die Fertigung in mehreren parallelen Linien erfolgt. Bei den bekannten Anlagen werden die oben offenen Verbundpackungen unmittelbar vor dem Sterilisieren aus einem Packungsmantel hergestellt. Da die Herstellung der Verbundpackungen auf einem intermittierend gedrehten Dornrad erfolgt, ist die Geschwindigkeit des linearen Transports unmittelbar von der Ausstoßgeschwindigkeit des Dornrades abhängig. Es ist schnell ersichtlich, dass die Transportgeschwindigkeit nicht beliebig erhöht werden kann, da die linear transportierten, oben offenen Verbundpackungen aus feststehenden Fülldüsen befüllt werden müssen. Bei linearem Transport der zu füllenden Verbundpackungen und feststehenden Fülldüsen muss bei einer Optimierung der Ausstoßgeschwindigkeit der eigentliche Füllvorgang in relativ kurzer Zeit vonstatten gehen, was zu einer unerwünschten Schaumbildung auf der Flüssigkeit führt.

Eine gattungsgemäße Vorrichtung ist aus der US-A-6,101,786 bekannt. Dort sind zwar Fülleinheiten, welche fest auf einem Rundläufer angeordnet sind, gezeigt, es gibt jedoch weder Bearbeitungslinien auf dem Rundläufer, noch sind an dem Rundläufer radial verlaufende Transporteinrichtungen vorhanden.

Der Erfindung liegt daher die Aufgabe zugrunde, eine Füllmaschine der eingangs genannten und zuvor näher beschriebenen Art so auszugestalten und weiterzuentwickeln, dass - bei gleichbleibendem Ausstoß - für die einzelnen Vorgänge (Sterilisier-, Füll- und Verschließvorgang) mehr Zeit zur Verfügung gestellt werden kann, insbesondere um die unerwünschte Schaumbildung zu verhindern.

Diese Aufgabe wird dadurch gelöst, dass eine Mehrzahl,von zu Bearbeitungslinien zusammengefassten Aggregaten aus Sterilisiereinheit, Trocknungseinheit und Fülleinheit fest auf einem rotierenden Rundläufer angeordnet ist, dass die Bearbeitungslinien im Wesentlichen in radialer Richtung in Bezug auf die Rotationsachse des Rundläufers verlaufen und dass die Transportrichtung der Verbundpackungen auf dem Rundläufer radial um die Rotationsachse verläuft.

Gemäß einer bevorzugten Lehre der Erfindung wird dabei der Rundläufer kontinuierlich um die Rotationsachse gedreht.

Eine weitere Lehre der Erfindung sieht vor, dass der Transport der Verbundpackungen in radialer Richtung auf je eine der Anzahl der Aggregatreihen entsprechenden mitlaufenden Vorschieber erfolgt. Zweckmäßigerweise wird als Steuerelement für die Bodenführung der Verbundpackungen unterhalb des rotierenden Rundläufers eine feststehende Tragschiene verwendet. Bevorzugt weist diese feststehende Tragschienen wenigstens eine Aussparung zum Ausschleusender befüllten und gegebenenfalls verschlossenen Verbundpackungen auf.

Gemäß einer weiteren bevorzugten Ausführung der Erfindung sind die auf dem rotierenden Rundläufer angeordneten Verbundpackungen und/oder die einzelnen Einheiten bzw. Aggregate in senkrechter Richtung relativ zueinander verschiebbar angeordnet. Alternativ oder zusätzlich sind die auf dem rotierenden Rundläufer angeordneten Verbundpackungen auch in radialer Richtung relativ zueinander verschiebbar angeordnet. Die Relativbewegung erfolgt zweckmäßigerweise über eine Kurvensteuerung.

Eine weitere Lehre der Erfindung sieht vor, dass der rotierende Rundläufer bis auf die Öffnungen zum Ein- bzw. Ausschleusen der Verbundpackungen gegenüber der Atmosphäre abgeschlossen ist.

Erfindungsgemäß ist es möglich, dass auf dem Rundläufer eine Mehrzahl von Verschließeinheiten vorgesehen sind. Bei dieser ersten Ausführungsform der Erfindung werden die Verbundpackungen von außen in den Rundläufer eingeschleust, dort über ihre Umfangsbewegung radial auf die Rotationsachse zubewegt und dabei gefüllt und verschlossen. Das Ausschleusen erfolgt dann zweckmäßigerweise senkrecht nach unten.

Eine alternative Ausführungsform der Erfindung sieht vor, dass eine Mehrzahl von Verschließeinheiten außerhalb des rotierenden Rundläufers vorgesehen ist. Bei dieser alternativen Ausführungsform sind die Verschließeinheiten bevorzugt in einem ringsegmentartigen Gehäuse außerhalb des Rundläufergehäuses angeordnet, welches um einen vorgegebenen Winkel um die Rotationsachse und relativ zum Rundläufer rotierbar ist.

Beide Ausführungsformen weisen zweckmäßigerweise Verschließeinheiten auf, welche als Ultraschallschweißeinheiten ausgebildet sind.

Verfahrensmäßig erfolgt die Lösung der Aufgabe durch die folgenden Schritte:
- Einschieben der oben offenen Verbundpackungen in den Rundläufer,
- Sterilisieren und Trocknen der Packungen während des rotatorischen Transports,
- Radialer Transport der sterilisierten und getrockneten Verbundpackungen in die Fülleinheit,
- Befüllen der Verbundpackungen,
- Radialer Transport der gefüllten Verbundpackungen zur Verschließeinheit,
- Verschließen der Verbundpackungen und
- Ausschleusen der Verbundpackungen aus der Füllmaschine.

Gemäß einer ersten erfindungsgemäßen Alternative sind die Verschließeinheiten zum Verschließen der gefüllten Verbundpackungen auf dem Rundläufer angeordnet. Alternativ ist es jedoch auch möglich, dass das Verschließen der gefüllten Verbundpackuhgen außerhalb des Rundläufers erfolgt, wie nachfolgend näher beschrieben ist.

Jeder zu füllenden Verbundpackung ist eine taschenartige Sterilkammer zugeordnet, die jeweils eine H₂O₂-Düse und eine Heißdampfdüse aufweist. Darüber hinaus folgen radial einwärts nacheinander ein Füllauslauf und ggf. eine Siegeleinrichtung für das Verschließen der Verbundpackung.

Die Erfindung wird nachfolgend anhand einer lediglich zwei bevorzugte Ausführungsbeispiele darstellenden Zeichnung näher erläutert..In der Zeichnung zeigen
- Fig. 1: einen erfindungsgemäßen Rundläufer, schematisch in Draufsicht,
- Fig. 2: eine vergrößerte Darstellung einer Sterilkammer des Rundläufers mit angedeuteten Aggregaten in perspektivischer Darstellung,
- Fig. 3: die Sterilkammer aus Fig. 2, schematisch in Seitenansicht,
- Fig. 4: die Sterilkammer aus Fig. 2 in Draufsicht,
- Fig. 5: ein weiteres Ausführungsbeispiel der erfindungsgemäßen Füllmaschine in schematischer Bewegungsabfolge,
- Fig. 6: das Verschließsegment der alternativen Füllmaschine in perspektivischer Darstellung und
- Fig. 7: eine Verschließeinheit der Ausführungsform gemäß Fig. 6 in vergrößerter Darstellung.

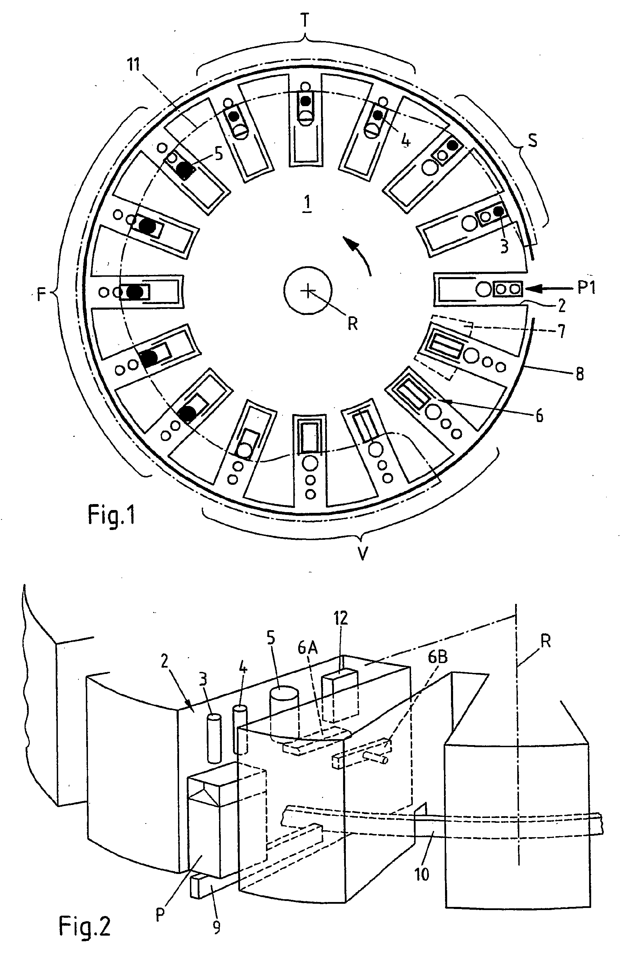

In Fig. 1 ist schematisch der Aufbau der erfindungsgemäßen Füllmaschine gemäß einem ersten Ausführungsbeispiel in Draufsicht dargestellt. Dabei weist ein um eine Rotationsachse R drehbarer Rundläufer 1 eine Mehrzahl von zellen- oder taschenartigen Sterilkammern 2 auf, von denen allesamt mit Behandlungsaggregaten versehen sind. Im dargestellten und insoweit bevorzugten Ausführungsbeispiel weist der Rundläufer sechzehn solcher Aggregate aus Sterilisiereinheit, Trocknungseinheit, Fülleinheit und Verschließeinheit auf. Wie insbesondere aus Fig. 2 ersichtlich, besteht die Sterilisiereinheit dabei im wesentlichen aus einer H₂O₂-Düse 3, die Trocknungseinheit aus einer Heißdampfdüse 4, die Fülleinheit aus einem Füllauslauf 5 und die Verschließeinheit aus einer Sonotrode 6A und einem Amboss 6B. Nach Befüllen und Verschließen der Verbundpackung P, welche in Richtung des Pfeiles P1 in den Rundläufer eingeschleust worden ist, erfolgt dann senkrecht nach unten über eine nur angedeutete Öffnung 7.

Die Sterilkammer 2 ist nach außen durch eine feststehende Außenwand 8 abgeschlossen und durch nicht dargestellte Dichtlippen abgedichtet. Gleiches gilt auch für die obere (nicht dargestellte) feststehende Abdeckung. Eine untere Abschottung ist nicht vorgesehen, da das H₂O₂-Luftgemisch nach dem Ausblasen und vor dem Einfüllen aus der Kammer nach unten entweichen muss.

Die H₂O₂-Düse und die Heißdampfdüse werden nacheinander eingeschaltet. Während beispielsweise die Sterilisation 'S' über zwei "Stationen" erfolgt, kann die Trocknung 'T', also das Ausblasen des H₂O₂-Luftgemisches über mehreren Stationen erfolgen, im Beispiel drei.

Nach dem Sterilisationsvorgang wird die Verbundpackung P mittels eines mitlaufenden Vorschiebers 9, der unterhalb einer radial angeordneten gleichfalls mitlaufenden Tragschiene 10 angeordnet ist, radial nach innen unter den Füllauslauf 5 geschoben. Dieser wird zum Füllen 'F' im dargestellten und bevorzugten Ausführungsbeispiel über fünf Stationen aktiviert, wodurch ein stetiges schaumarmes Abfüllen des Produktes ermöglicht wird.

Es ist auch denkbar, den Vorschieber 9 durch eine entsprechend der radial einwärts gerichteten Bewegung der Verbundpackung P ausgebildete feststehende Kurve 11 zu ersetzen.

Nach dem Füllvorgang erfolgt bevorzugt eine weitere Einwärtsbewegung der Verbundpackung P, damit diese unter die Siegelbacken 6A, 6B gelangt. Das Verschließen 'V' erfolgt nun über drei Stationen.

Durch eine Dampfdüse 12 kann das Packungsmaterial während des Verschleißens am Kopf der Verbundpackung P nach dem Befüllen noch erhitzt werden, um den unvermeidbaren Luftanteil in der geschlossenen Verbundpackung P durch anschließende Abkühlung zu minimieren.

In der letzten Station wird die nunmehr gefüllte und verschlossene Verbundpackung P abschließend noch einmal in Richtung auf die Rotationsachse R verschoben, wo die Packungsohren in bekannter Weise angelegt werden. Danach wird die fertige Verbundpackung durch die Öffnung 7 nach unten aus dem Rundläufer 1 abgezogen und auf einem nicht dargestellten Transportband abgeführt.

Im bevorzugten Beispiel benötigt man für einen Produktionszyklus eine Drehung um 360°. Bei entsprechend groß dimensioniertem Rundläufer ist auch eine Verdoppelung auf 2 x 180° möglich, wobei die dann beiden Zufuhr- und Ausschleuseöffnungen sich dann jeweils gegenüberliegen.

Gegenüber der bisher eingesetzten, intermittierend arbeitenden Längsläuferfüllmaschine hat eine Rundläuferfüllmaschine den Vorteil, dass alle Vorgänge an einer zu den Aggregaten relativ fest stehenden Verbundpackung erfolgen. Es wird dadurch mehr Zeit für die einzelnen Vorgänge gewonnen, die intensiver (Sterilisation), schaumarm (Füllvorgang) und sicherer (Versiegelung) durchführbar sind.

Sollte es erforderlich sein, dass einzelne Aggregate 3, 4 oder 5 in die Verbundpackung P eingetaucht werden müssen, so ist dieses ohne weiteres durch eine Kurvensteuerung (Zylinderkurve) oberhalb der rotierenden Einheiten möglich.

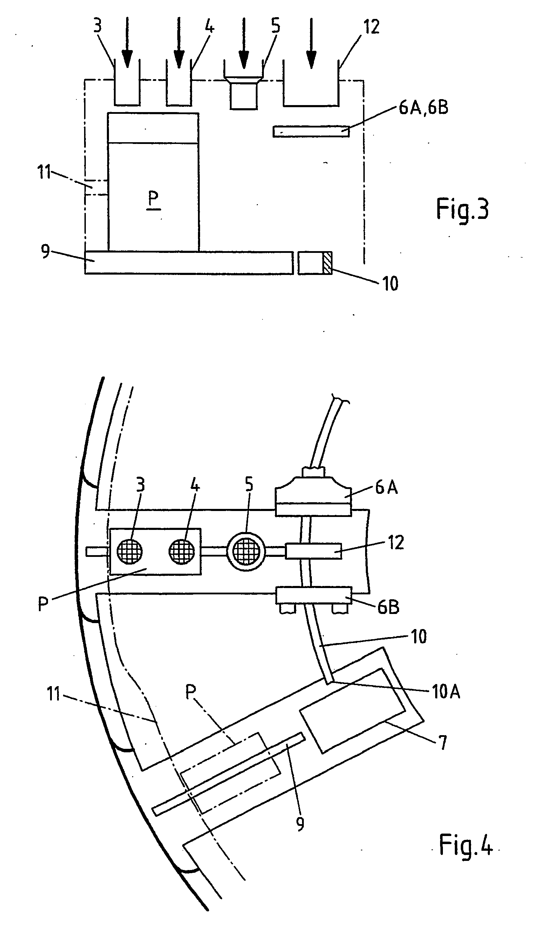

Zur besseren Darstellung ist in den Fig. 3 und 4 die Anordnung der einzelnen Aggregate innerhalb einer Sterilkammer 2 in Seitenansicht bzw. Draufsicht dargestellt.

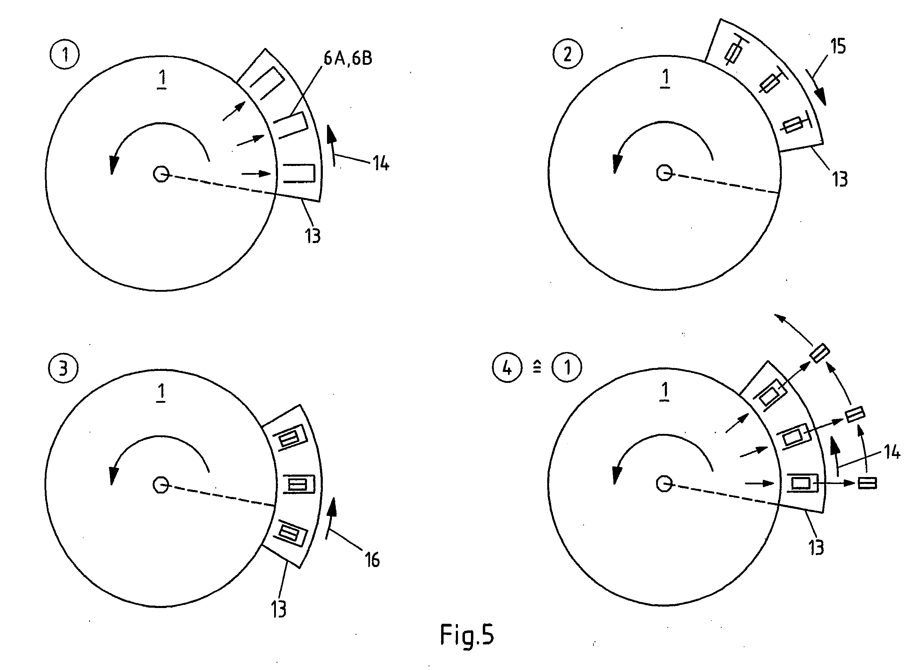

Die Fig. 5, 6 und 7 illustrieren eine mögliche weitere Ausführungsform der erfindungsgemäßen Füllmaschine. Dabei befindet sich die Verschließeinheit nicht mehr auf dem eigentlichen Rundläufer, sondern in einem ringsegmentartigen Gehäuse 13, welches um einen vorgegebenen Winkel um die Rotationsachse R rotierbar ist. Hierbei erfolgt das Sterilisieren, Trocknen und Füllen der Verbundpackungen P auf dem Rundläufer 1 wie im zuvor beschriebenen Beispiel, so dass auf eine nochmalige Beschreibung verzichtet werden kann.

In Fig. 5 ist die Arbeitsweise dieser Alternative der erfindungsgemäßen Füllmaschine schematisch in Draufsicht dargestellt. Im dargestellten und insoweit bevorzugten Ausführungsbeispiel weist das Gehäuse 13 drei Verschließstationen auf, welche jeweils mit Verschließeinheiten 6A, 6B versehen sind. Die im Inneren des Rundläufers 1 befüllten Verbundpackungen werden radial nach außen in das Gehäuse 13 transportiert, dazu bewegt sich das Gehäuse 13 mit der gleichen Umfangsgeschwindigkeit wie der Rundläufer 1 in Richtung des Pfeiles 14, wie in Stellung ① dargestellt. In Stellung ② ist schematisch angedeutet, dass die Verschließeinheiten 6A, 6B die Verbundpackungen verschlossen haben und das Verschließen der Verbundpackung stattfindet, während das Segment 13 in Richtung des Pfeiles 15 wieder entgegen der Drehung des Rundläufers 1 verfahren wird. In der Stellung ③ werden dann die Siegelwerkzeuge 6A, 6B wieder entfernt, die Packungsohren angesiegelt und die Drehrichtung abermals in Richtung des Pfeiles 16 umgekehrt. Dann beginnt der Vorgang von Neuem, wie in Stellung ④, welche Stellung ① entspricht, dargestellt. Während des radialen Nachschiebens offener, bereits gefüllter Verbundpackungen werden die fertigen Verbundpackungen in Richtung der nicht dargestellten Pfeile radial nach außen aus dem Gehäuse 13 ausgeschleust und in bekannter Weise weiter transportiert.

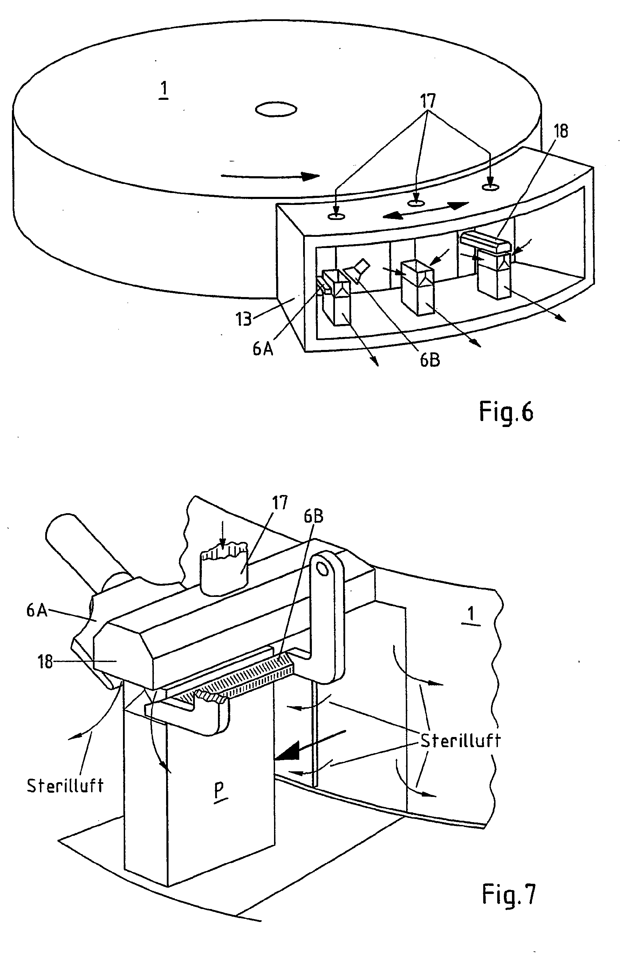

Zum besseren Verständnis ist der Vorgang des Verschließens in den Fig. 6 und 7 noch einmal vergrößert in perspektivischer Ansicht dargestellt. Um nun auch das ringsegmentartige Gehäuse 13 keimfrei zu halten, wird über nur angedeutete Leitungen 17 Sterilluft in über der Verbundpackung angeordnete Sterilluftkammern 18 geblasen, um das Eindringen von Keimen in das Packungsinnere während des Verschließens zuverlässig auszuschließen. Zur besseren Übersicht ist in Fig. 6 nur in der ganz rechten Station eine solche Sterilluftkammer 18 dargestellt. Die vergrößerte Darstellung in Fig. 7 zeigt, dass die Sterilluftkammer über den gesamten Transportweg der Verbundpackung P hinwegreicht. Aus dem Rundläufer 1 austretende Sterilluft strömt dabei gleichzeitig ins Innere des Gehäuses 13, so dass auch hier ein Überdruck herrscht.

Die vorliegende Erfindung ist nicht auf die dargestellten Ausführungsbeispiele beschränkt, hier ist vielmehr an zwei denkbaren Alternativen dargestellt, dass zum längeren Verweilen einer zu füllenden Verbundpackung während deren kontinuierlichen Transports durch die geschickte Anordnung und entsprechend überlagerte rotatorische bzw. translatorische Bewegungsabläufe ein geschicktes Ausnutzen von Maschinen bei überschaubarem Raumangebot möglich ist.

## Patentansprüche

1. Füllmaschine zum Abfüllen von Lebensmitteln, insbesondere Getränken, in oben offene, rotierend transportierte Verbundpackungen und zum Verschließen derselben, mit einer Packungstransporteinrichtung, einer Sterilisiereinheit, einer Trocknungseinheit, einer Fülleinheit und einer Verschließeinheit,
**dadurch gekennzeichnet,**
**dass** eine Mehrzahl von als Bearbeitungslinien ausgebildeten Aggregaten aus Sterilisiereinheit, Trocknungseinheit und Fülleinheit fest auf einem rotierenden Rundläufer (1) angeordnet ist, dass die Bearbeitungslinien im Wesentlichen in radialer Richtung in Bezug auf die Rotationsachse (R) des Rundläufers (1) verlaufen und dass die Transportrichtung der Verbundpackungen (P) auf dem Rundläufer (1) radial zu der Rotationsachse (R) des Rundläufers (1) verläuft.

2. Füllmaschine nach Anspruch 1,
**dadurch gekennzeichnet,**
**dass** der Rundläufer (1) kontinuierlich gedreht wird.

3. Füllmaschine nach Anspruch 1 oder 2,
**dadurch gekennzeichnet,**
**dass** der Transport der Verbundpackungen (P) in radialer Richtung auf je eine der Anzahl der Aggregatreihen entsprechenden mitlaufenden Vorschieber (9) erfolgt.

4. Füllmaschine nach einem der Ansprüche 1 bis 3,
**dadurch gekennzeichnet,**
**dass** für die Verbundpackungen (P) unterhalb des rotierenden Rundläufers (1) eine feststehende Tragschiene (10) als Bodenführung angeordnet ist.

5. Füllmaschine nach Anspruch 4,
**dadurch gekennzeichnet,**
**dass** die feststehende Tragschiene (10) wenigstens eine Aussparung (10A) zum Ausschleusen der gefüllten und ggf. verschlossenen Verbundpackungen (P) aufweist.

6. Füllmaschine nach einem der Ansprüche 1 bis 5,
**dadurch gekennzeichnet,**
**dass** die auf dem rotierenden Rundläufer (1) angeordneten Verbundpackungen (P) und/oder die einzelnen Einheiten bzw. Aggregate in senkrechter Richtung, parallel zur Rotationsachse (R) des Rundläufers (1), relativ zueinander verschiebbar angeordnet sind.

7. Füllmaschine nach einem der Ansprüche 1 bis 6,
**dadurch gekennzeichnet,**
**dass** die auf dem rotierenden Rundläüfer (1) angeordneten Verbundpackungen (P) in radialer Richtung relativ zueinander verschiebbar sind.

8. Füllmaschine nach Anspruch 6 oder 7,
**dadurch gekennzeichnet,**
**dass** die Relativbewegung über eine Kurvensteuerung (11) erfolgt.

9. Füllmaschine nach einem der Ansprüche 1 bis 8,
**dadurch gekennzeichnet,**
**dass** der rotierende Rundläufer (1) bis auf die Öffnungen zum Ein- bzw. Ausschleusen der Verbundpackungen (P) gegenüber der Atmosphäre abgeschlossen ist.

10. Füllmaschine nach einem der Ansprüche 1 bis 9,
**dadurch gekennzeichnet,**
**dass** der Rundläufer eine Mehrzahl von Verschließeinheiten (6A, 6B) aufweist.

11. Füllmaschinen nach einem der Ansprüche 1 bis 9,
**dadurch gekennzeichnet,**
**dass** eine Mehrzahl von Verschließeinheiten (6A, 6B) außerhalb des rotierenden Rundläufers (1) vorgesehen ist.

12. Füllmaschine nach Anspruch 11,
**dadurch gekennzeichnet,**
**dass** die Verschließeinheiten in einem ringsegmentartigen Gehäuse (13) außerhalb des Rundläufers (1) angeordnet sind, welches um einen vorgegebenen Winkel um die Rotationsachse (25) und relativ zum Rundläufer (1) rotierbar ist.

13. Füllmaschine nach einem der Ansprüche 1 bis 12,
**dadurch gekennzeichnet,**
**dass** die Verschließeinheit (6A, 6B) als Ultraschallschweißeinheit ausgebildet ist.

14. Verfahren zum Abfüllen von Lebensmitteln, insbesondere Getränken, in oben offene, rotierend transportierte Verbundpackungen und zum Verschließen derselben mittels einer Füllmaschine, mit einer Packungstransporteinrichtung, einer Sterilisiereinheit, einer Trocknungseinheit, einer Fülleinheit und einer Verschließeinheit,
**gekennzeichnet durch**
die folgenden Schritte:
- Einschieben der oben offenen verbundpackuzngen in einen rotierenden Rundläufer, auf dem eine Mehrzahl von als Bearbeitungslinien ausgebildeten Aggregaten aus Sterilisiereinheit, Trocknungseinheit und Fülleinheit fest angeordnet ist,
- Sterilisieren und Trocknen der Verbundpackungen während des rotatorischen Transports,
- Radialer Transport der sterilisierten und getrockneten Verbundpackungen in die Fülleinheit,
- Befüllen der Verbundpackungen,
- Radialer Transport der gefüllten Verbundpackungen zur Verschließeinheit,
- Verschließen der Verbundpackungen und
- Ausschleusen der Verbundpackungen aus der Füllmaschine.

15. Verfahren nach Anspruch 14,
**dadurch gekennzeichnet,**
**dass** das Verschließen der gefüllten Verbundpackungen innerhalb des Rundläufers erfolgt.

16. Verfahren nach Anspruch 14,
**dadurch gekennzeichnet,**
**dass** das Verschließen der gefüllten Verbundpackungen außerhalb des Rundläufers erfolgt.

17. Verfahren nach Anspruch 14 oder 15,
**dadurch gekennzeichnet,**
**dass** das Ausschleusen der gefüllten Verbundpackungen parallel zur Rotationsachse erfolgt.

18. Verfahren nach Anspruch 17,
**dadurch gekennzeichnet,**
**dass** das Ausschleusen der gefüllten Verbundpackungen nach unten erfolgt.

19. Verfahren nach einem der Ansprüche 14 bis 18,
**dadurch gekennzeichnet,**
**dass** das Ausschleusen der gefüllten Verbundpackungen radial nach außen erfolgt.

## Claims

1. A filling machine for filling foodstuffs, particularly beverages, in composite packages, which are open on top and transported in a rotating fashion and for sealing the packages, having a package transport device, a sterilization unit, a drying unit, a filling unit, and a sealing unit,
**characterized in that** multiple aggregates, made of a sterilization unit, a drying unit, and a filling unit, which are assembled into processing lines, are positioned fixed on a rotating rotary machine (1), the processing lines run substantially in radial direction in relation to the axis of rotation (R) of the rotary machine (1) and the transport direction of the composite packages (P) runs radially around the axis of rotation (R) on the rotary machine (1).

2. The filling machine according to Claim 1,
**characterized in that** the rotary machine (1) is rotated continuously.

3. The filling machine according to Claim 1 or 2,
**characterized in that** the transport of the composite packages (P) occurs in the radial direction each on a plurality of traveling feeders (9) corresponding to the number of the assembly rows.

4. The filling machine according to one of Claims 1 through 3,
**characterized in that** a fixed support rail (10) for the composite packages (P) is positioned below the rotating rotary machine (1) as a floor guide.

5. The filling machine according to Claim 4,
**characterized in that** the fixed support rail (10) has at least one recess (10A) for the discharge of the filled and possibly sealed composite packages (P).

6. The filling machine according to one of Claims 1 through 5,
**characterized in that** the composite packages (P) positioned on the rotating rotary machine (1) and/or the individual units or assemblies are situated so they are displaceable in the vertical direction parallel to the axis of rotation (R) in relation to one another.

7. The filling machine according to one of Claims 1 through 6,
**characterized in that** the composite packages (P) positioned on the rotating rotary machine (1) are displaceable in the radial direction in relation to one another.

8. The filling machine according to Claim 6 or 7,
**characterized in that** the relative motion is performed via a curve controller (11).

9. The filling machine according to one of Claims 1 through 8,
**characterized in that** the rotating rotary machine (1) is sealed in relation to the atmosphere except for the openings for the inward and/or outward transfer of the composite packages (P).

10. The filling machine according to one of Claims 1 through 9,
**characterized in that** the rotary machine has multiple sealing units (6A, 6B).

11. The filling machine according to one of Claims 1 through 9,
**characterized in that** multiple sealing units (6A, 6B) are provided outside the rotating rotary machine (1) .

12. The filling machine according to Claim 11,
**characterized in that** the sealing units are positioned in a housing (13), shaped like an annular segment, outside the rotary machine (1), which is rotatable by a preset angle around the axis of rotation (25) and in relation to the rotary machine (1).

13. The filling machine according to one of Claims 1 through 12,
**characterized in that** the sealing unit (6A, 6B) is implemented as an ultrasonic welding unit.

14. A method for filling foodstuffs, particularly beverages, in composite packages which are open on top and transported in a rotating fashion, and for sealing the packages by means of a filling machine, using a package transport device, a sterilization unit, a drying unit, a filling unit, and a sealing unit,
**characterized by** the following steps:
- inserting the composite packages open on top into a rotating rotary machine, on which multiple aggregates made of a sterilization unit, a drying unit, and a filling unit, which are assembled into processing lines, are firmly positioned,
- sterilizing and drying the composite packages during the rotational transport,
- radial transport of the sterilized and dried composite packages into the filling unit,
- filling the composite packages,
- radial transport of the filled composite packages to the sealing unit,
- sealing the composite packages, and
- transferring the composite packages out of the filling machine.

15. The method according to Claim 14,
**characterized in that** the sealing of the filled composite packages is performed inside the rotary machine.

16. The method according to Claim 14,
**characterized in that** the sealing of the filled composite packages is performed outside the rotary machine.

17. The method accrding to Claim 14 or 15,
**characterized in that** the filled composite packages are discharged parallel to the rotary axis.

18. The method according to Claim 17,
**characterized in that** the filled composite packages are discharged downwards.

19. The method according to any of the claims 14 to 18,
**characterized in that** the filled composite packages are discharged radially outwards.

## Revendications

1. Machine de remplissage permettant d'emballer des denrées alimentaires, en particulier des boissons, dans des emballages assemblés ouverts en haut, transportés en rotation, et de refermer ces derniers, comprenant un dispositif de transport des emballages, une unité de stérilisation, une unité de séchage, une unité de remplissage et une unité de fermeture,
**caractérisée en ce qu'**une multitude de groupes configurés en lignes de traitement, comprenant une unité de stérilisation, une unité de séchage et une unité de remplissage sont disposés de façon fixe sur un carrousel tournant (1),
que les lignes de traitement s'étendent essentiellement dans le sens radial par rapport à l'axe de rotation (R) du carrousel (1),
et que le sens du transport des emballage composites (P) sur le carrousel (1) s'étend radialement par rapport à l'axe de rotation (R) du carrousel (1).

2. Machine de remplissage selon la revendication 1, **caractérisée en ce que** le carrousel est entraîné en rotation de façon continue.

3. Machine de remplissage selon la revendication 1 ou 2, **caractérisée en ce que** le transport des emballages assemblés (P) dans le sens radial s'effectue sur l'une respective de glissières d'avance (9) accompagnant le mouvement de rotation, glissières dont le nombre correspond au nombre de groupes.

4. Machine de remplissage selon l'une des revendications 1 à 3, **caractérisée en ce qu'**un rail de support stationnaire (10) servant de guidage du fond des emballages assemblés (P) est disposé en dessous du carrousel tournant (1).

5. Machine de remplissage selon la revendication 4, **caractérisée en ce que** le rail de support stationnaire (10) comporte au moins une découpe (10A) permettant l'éjection des emballages assemblés (P) remplis et, le cas échéant, fermés.

6. Machine de remplissage selon l'une des revendications 1 à 5, **caractérisée en ce que** les emballages assemblés (P) disposés sur le carrousel tournant (1) et/ou les différentes unités ou différents groupes sont agencés de façon mobile les uns par rapport aux autres dans le sens vertical, parallèlement à l'axe de rotation (R) du carrousel tournant (1).

7. Machine de remplissage selon l'une des revendications 1 à 6, **caractérisée en ce que** les emballages assemblés (P) disposés sur le carrousel tournant (1) sont mobiles les uns par rapport aux autres dans le sens radial.

8. Machine de remplissage selon la revendication 6 ou 7, **caractérisée en ce que** les déplacements relatifs sont commandés par un dispositif de commande de courbe (11).

9. Machine de remplissage selon l'une des revendications 1 à 8, **caractérisée en ce que** le carrousel tournant (1) est fermé et isolé de l'atmosphère, à l'exception des ouvertures pour l'introduction et l'éjection des emballages assemblés (P).

10. Machine de remplissage selon l'une des revendications 1 à 9, **caractérisée en ce que** le carrousel tournant comporte une multitude d'unités de fermeture (6A, 6B).

11. Machine de remplissage selon l'une des revendications 1 à 9, **caractérisée en ce qu'**une multitude d'unités de fermeture (6A, 6B) est prévue à l'extérieur du carrousel tournant (1).

12. Machine de remplissage selon la revendication 11, **caractérisée en ce que** les unités de fermeture sont disposées dans un carter (13) en forme de segment d'anneau à l'extérieur du carrousel tournant (1), ce carter pouvant être déplacé en rotation sur un angle prédéterminé autour de l'axe de rotation (25), et relativement au carrousel tournant (1).

13. Machine de remplissage selon l'une des revendications 1 à 12, **caractérisée en ce que** l'unité de fermeture (6A, 6B) est réalisée sous forme d'une unité de soudage aux ultrasons.

14. Procédé d'emballage de denrées alimentaires, en particulier de boissons, dans des emballages assemblés ouverts en haut, transportés en rotation, et de fermeture de ces derniers, au moyen d'une machine de remplissage comprenant un dispositif de transport des emballages, une unité de stérilisation, une unité de séchage, une unité de remplissage et une unité de fermeture,
**caractérisé par** les étapes suivantes :
- introduire les emballages composites ouverts en haut dans un carrousel tournant sur lequel plusieurs groupes, réalisés sous forme de lignes de traitement comprenant une unité de stérilisation, une unité de séchage et une unité de remplissage, sont agencés de façon fixe;
- stériliser et sécher les emballages assemblés pendant leur transport en rotation;
- transporter les emballages assemblés stérilisés et séchés dans le sens radial jusqu'à l'unité de remplissage;
- remplir les emballages assemblés;
- transporter les emballages assemblés dans le sens radial jusqu'à l'unité de fermeture;
- fermer les emballages assemblés, et
- éjecter les emballages assemblés hors de la machine de remplissage.

15. Procédé selon la revendication 14, **caractérisé en ce que** la fermeture des emballages assemblés s'effectue à l'intérieur du carrousel tournant.

16. Procédé selon la revendication 14, **caractérisé en ce que** la fermeture des emballages assemblés s'effectue à l'extérieur du carrousel tournant.

17. Procédé selon la revendication 14 ou la revendication 15, **caractérisé en ce que** l'éjection des emballages assemblés remplis s'effectue parallèlement à l'axe de rotation.

18. Procédé selon la revendication 17, **caractérisé en ce que** l'éjection des emballages assemblés remplis se fait vers le bas.

19. Procédé selon l'une des revendications 14 à 18, **caractérisé en ce que** l'éjection des emballages assemblés remplis se fait radialement vers l'extérieur.
